# EUROPEAN PATENT SPECIFICATION

(11) **EP 3 685 106 B1**
(45) Date of publication and mention of the grant of the patent: **30.10.2024**
(21) Application number: 18786013.5
(22) Date of filing: 14.09.2018
(51) Int. Cl.: F25B 6/02, F25B 43/02

(54) **OIL SEPARATOR**
ÖLABSCHEIDER
SÉPARATEUR D'HUILE

(30) Priority: 18.09.2017 GB 201715016
(43) Date of publication of application: 29.07.2020
(73) Proprietor: Daikin Industries, Ltd., Osaka-shi, Osaka 530-0001 (JP)
(72) Inventor: YOUNG, Terence William Thomas, Gravesend Kent DA11 7RN (GB)
(74) Representative: Hanson, William Bennett
(86) International application number: PCT/GB2018/052616
(87) International publication number: WO 2019/053444

(56) References cited:
- WO-A1-2015/082867
- CN-A- 106 196 776
- US-A- 5 036 679
- US-A1- 2011 239 667
- US-A1- 2013 126 415
- US-A1- 2017 184 331

## Description

### Background to the Invention

The present invention relates to an air conditioning system comprising a single compressor and a plurality of heat exchanger modules, each heat exchanger module being equipped with an oil/gas separator. It finds particular application in air conditioning systems, where oil exiting with the discharge gas from a compressor is required to be separated from the gas stream, for efficient heat exchanger operation.

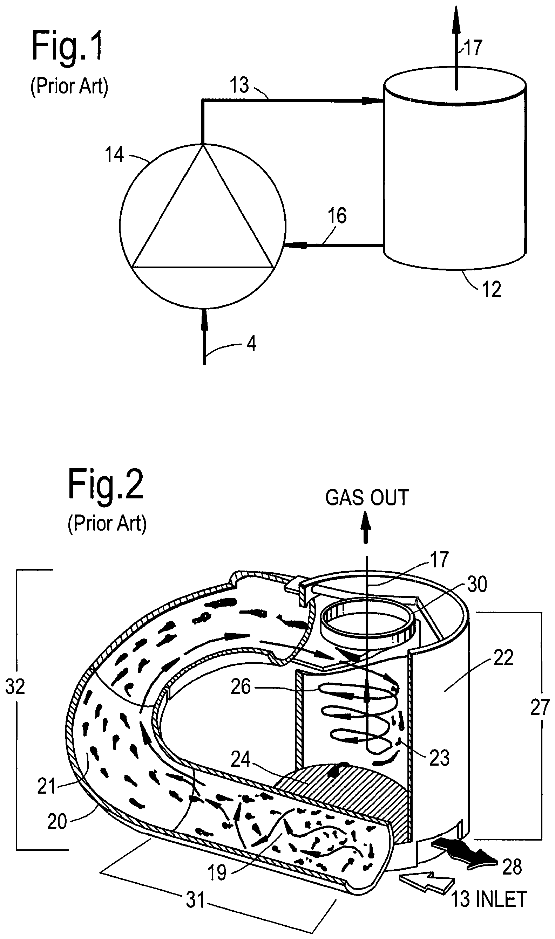

Figure 1 shows an overview of known air conditioning equipment comprising a compressor 14 and an external oil separator 12, these having a connection 17 to heat exchangers (not shown). During a compression process, gas enters the compressor 14 under suction 4. Oil is injected into the compressor 14 to improve efficiency and to provide cooling of the compressor 14. A gas and oil mixture is created in the compressor 14 which is delivered via a first inlet pathway 13 to the oil separator 12. Once separated, the gas is delivered via the connection 17 to the heat exchangers and the oil is delivered via a third pathway 16 back to the compressor 14. The quantity of oil allowed to enter a cooling system such as an air conditioning system must be kept to a minimum if heat exchanger efficiency is to be maintained. For example, oil carry over limits have been approximately 2% for direct expansion system types.

Oil separation is a requirement for efficient operation of any cooling system such as a refrigeration or air conditioning system operating with a compressor 14 which requires oil for lubrication and/or sealing and/or cooling, unless the oil is completely isolated from the compression process. Such oil separators 12 tend to adopt one or more of the standard oil separation processes:
1. Impingement
2. Velocity drop out
3. Centrifugal effect
4. Coalescence

Figure 2 shows the oil/gas separator described in our international application WO 2015/082867. This comprises a duct 20 with one or more bends in it, the duct discharging to a centrifugal cylinder 22. Gas mixed with oil particles is received into an inlet 13 of the duct 20 from the discharge port of a compressor (not shown). In the received mixture 19, particles of oil entrained in the gas stream are both randomly distributed and multi directional. The first separation phase is created using a straight length 31 of the duct 20 combined with a bend section 32 coupling the straight length 31 into the cylinder 22.

The partly separated gas and oil pass into a second separation phase which is an impingement stage, constructed to prevent re-entrainment. This phase incorporates the centrifuging cylinder 22 designed to further separate the oil 23 from the gas stream 26 thereby preventing re-entrainment. Entry into this second stage 22 can be tangentially on one or other side of the cylindrical vessel 22. Separated oil 23 falls to the bottom of the cylinder 22 where it can form an oil reservoir 24 suitable for supply as required. Gas 17 with the oil removed exits through a port 30 at the top of the cylinder 22.

US 2011/239667 A1 describes an air conditioning system having a plurality of compressors, each with an oil level detecting device. Oil can be redistributed between the compressors to assist with even running and reduce the number of abnormal fluctuations in the oil level. Each compressor is provided with an oil separator.

### Summary of the Invention

The present invention provides an air conditioning system according to claim 1.

The design of the separator is such as to ensure that the maximum system velocity is less than that required to carry oil particles upwards within the centrifuging cylinder. Optional features of the invention are set out in the dependent claims.

The centrifuging cylinder of WO 2015/082867 has a significantly larger diameter. This cylinder must be cast from iron or similar metallic material. It is therefore heavy and inconvenient, particularly for rooftop installations.

A suitable number of separators is ganged to allow operation of a single larger compressor. The cost of the plurality of separators of the invention is lower than the cost of a single separator of the prior art discussed above.

Unlike conventional separators, a separator according to an embodiment of the present invention is not primarily dependant on gas velocity. There are however potential constraints on gas velocity in the duct. The maximum gas velocity is limited by the maximum allowable pressure drop during travel in the duct. In a cooling system, a large pressure drop may mean that the cooling system efficiency falls to an unacceptable level. The pressure drop in a cooling system might lie in the range 200 to 400mbar for example. The minimum gas velocity in the duct is limited by the maximum acceptable separator size since a slower-moving mixture will generally require a larger diameter duct and vessel sizes, which may not suit a final installation. In this invention the pressure loss is > 200mbar.

Embodiments of the invention have been found to provide oil carry over levels as low as 1.5%. They can provide significant improvements in efficiency per unit size oil/gas separator, together with manufacturing simplicity and can operate across a wide range of operating conditions.

### Brief Description of the Drawings

Embodiments of the respective aspects of the invention will now be described, by way of example only, with reference to the accompanying drawings in which:
Figure 1 shows a block diagram of known air conditioning equipment;
Figure 2 shows the oil/gas separator described in our international application WO 2015/082867;
Figure 3 shows an oil/gas separator according to the invention;
Figure 4 is a cut-away view of the separator of Figure 3;
Figure 5 shows an air conditioning system including the separator of Figure 3; and
Figure 6 shows a larger air condition system including three oil separators, each according to Figure 3.

### Detailed Description of Particular Embodiments

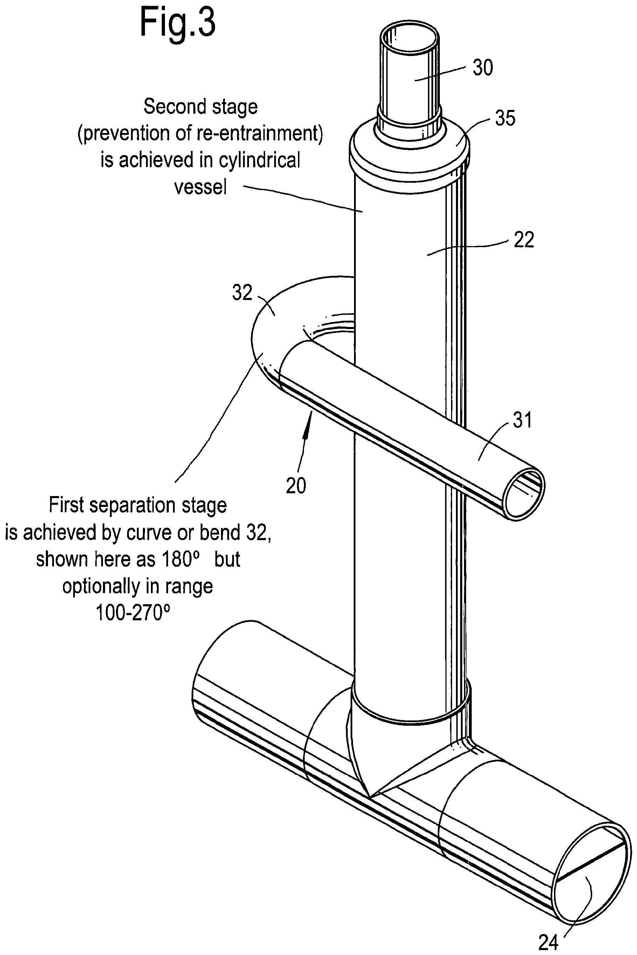

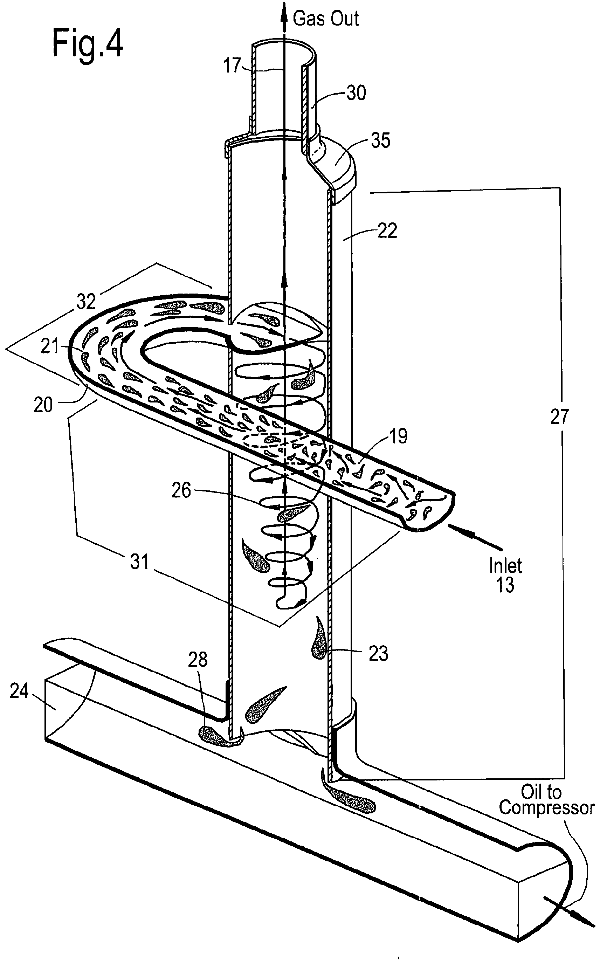

Figures 3 and 4 show an oil/gas separator having a duct 20 with a bend 32, discharging into a centrifuging cylinder 22. The principle of operation is similar to that of WO 2015/082867, i.e. an inlet 13 of the duct 20 received an oil/gas mixture from the discharge port of a compressor (not shown). Particles of oil entrained in the gas stream undergo a first separation phase in the bend section 32 of the duct.

The outside diameter of the centrifuging cylinder is at most 180 mm, and in certain embodiments is 100 to 150 mm. The cylinder can conveniently be formed from piping sections, such as copper piping sections. In one example, it is formed from a commonly available copper tube of outside diameter 104.8 mm. In another example, it is formed from an aluminium casting and it may alternatively be formed from stainless steel.

The internal diameter of the cylinder 22 might be two or three times the internal diameter of the duct 20. For example, for cylinder of 100 to 150 mm, the duct can have a diameter of 50 mm. The height of the cylinder 22 might be greater than five times the internal diameter of the duct 20.

A tapering part 35 connects the top of the centrifuging cylinder to an upper gas outlet 30. The duct 20 and the upper gas outlet 30 can also be formed from pipe-shaped parts. They and the tapering part 35 can for example be of commonly-available parts. These can be joined by brazing or welding. Alternatively, the cylinder 22, tapering part 35 and upper gas outlet 30 can be formed from a single pipe, formed into the required shape by known machinery.

The bend section 32 could show a single bend or a series of bends providing a total change in direction with respect to the axial direction of the inlet in the range from 100 degrees to 270 degrees. The bend section 32 extends at least partially in a horizontal direction but could be tilted in one or more other directions. For example, the series of bends need not be in the same plane.

In the first separation phase, oil particles are coalesced by a combination of factors: surface tension both between the particles and with the inner surface 21 of the duct 20; the centrifugal forces of the bend 32; and the effect of gravity. This combination ensures a two part oil and gas separation first phase before entering into the centrifugal second separation phase 22.

Entering the second separation phase 22, partly separated gas and oil pass into an impingement separation stage constructed to prevent re-entrainment. This phase incorporates the centrifuging cylinder 22 designed to further separate the oil 23 from the gas stream 26 thereby preventing re-entrainment. Entry into this second stage 22 can be tangentially on one or other side of the cylindrical vessel 22. Separated oil 23 falls to the bottom of the cylinder 22 which communicates with an oil reservoir 24, formed here as a horizontal conduit, suitable for resupply as required. Gas 17 with the oil removed exits through the outlet 30 at the top of the cylinder 22.

As with WO 2015/082867, the separator of the invention does not have a vortex finder.

Oil for return to the compressor 14 requires velocity. This can be generated by a head of oil collected in the reservoir 24 or by imparting velocity otherwise to the oil. For example, if the cylinder 22 provides sufficient head, the oil can be discharged through a port 28 to the reservoir 24 for delivery back to the compressor 14. Alternatively, the oil 23 can be delivered to a downstream oil reservoir elsewhere. In a further embodiment, the rotation of the oil within the second stage separation cylinder 22 may be used together with a tangential position of the oil outlet 28 to provide the required outlet velocity and thereby reduce the required oil head and thus system oil fill.

The relationship between the cross sectional diameter of the inner surface of the duct 20 and the diameter of the cylinder 22 is important for optimum performance. If the duct diameter is too small, pressure drops in the duct 20 are too high which reduces the cooling system efficiency as mentioned above. A duct diameter which is of the order of one third to one half of the diameter of the second stage cylinder 22 has been found to be about the right relationship. A working example is a duct 20 having a nominal bore size of 50 mm with a bend section 32 having duct radius 75 mm to the outside of the pipe 20. The second phase cylinder 22 would then have an internal diameter of 104mm.

The bend section 32 of the duct 20 provides a change in direction from the straight section 31 to the inlet to the second stage cylinder 22 of approximately 180°. Alternative arrangements are possible, as illustrated in WO 2015/082867, where the change in direction can be less than 180° (e.g. as little as 100°), or up to 270° or more.

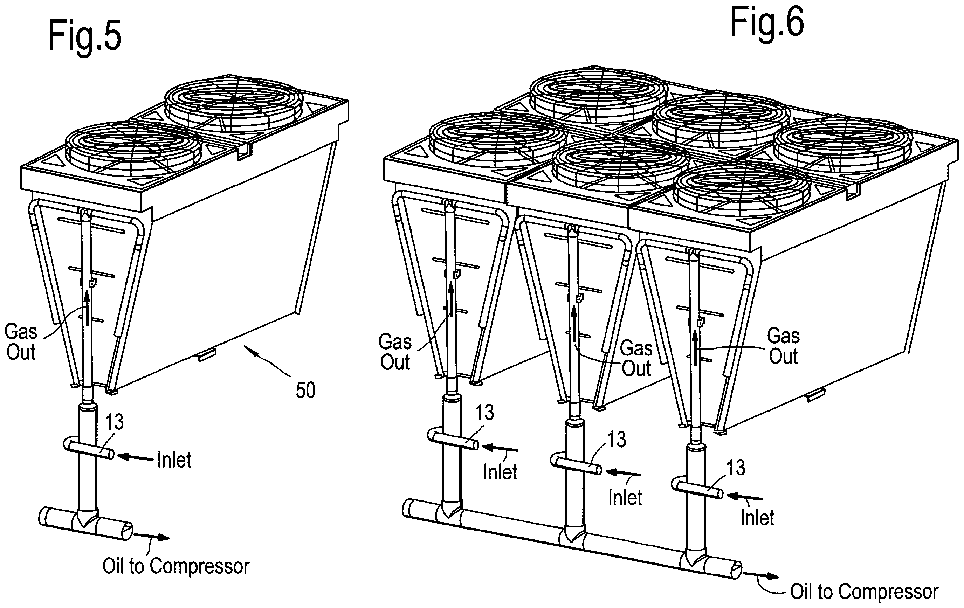

Figure 5 shows an air conditioning system comprising a compressor/heat exchanger unit 50. The inlet 13 of the separator receives the oil/gas mixture from the compressor. The refrigerant gas is fed from the upper gas outlet 30 to the heat exchanger, and the separated oil passes from the reservoir 24 back to the compressor.

Figure 6 shows a system comprising three heat exchanger modules, and a separator of the invention connected to each one. The oil reservoir 24 is a common line accepting oil from all three separators and returning it to the compressor.

The oil separator of this invention is in effect formed by the pipework that is required to recirculate refrigerant. A part of that pipework is modified in a simple manner, providing a lightweight and inexpensive separation mechanism instead of the known separator that requires specialised manufacture.

## Claims

1. An air conditioning system comprising a single compressor and a plurality of heat exchanger modules (50),
each heat exchanger module (50) being equipped with an oil/gas separator configured to receive an oil/gas mixture from the compressor and to feed separated gas to the respective heat exchanger module;
each oil/gas separator comprising a duct (20) having an inlet (13) for receiving the oil/gas mixture, the duct (20) having an inner surface providing a bend or series of bends extending at least partially in a horizontal direction, the duct (20) providing at least partial separation of the oil/gas mixture, in use, by both gravitational and centrifugal oil collection onto the inner surface (21), and the duct (20) being arranged to deliver gas and collected oil into a centrifuging cylinder (22) providing an internal impingement surface, an upper gas outlet (30), and a lower oil outlet (28), the cylinder (22) having an internal diameter of less than 180 mm;
the air conditioning system further comprising a gas/oil manifold, wherein the gas/oil manifold communicates with the duct (20) of each separator.

2. An air conditioning system according to claim 1, wherein said internal diameter is less than 160 mm, less than 140 mm or less than 120 mm.

3. An air conditioning system according to claim 1 or 2, wherein said internal diameter is at least 100mm.

4. An air conditioning system according to claim 1, 2 or 3, wherein the centrifuging cylinder (22) is of copper, aluminium or an alloy of copper or aluminium.

5. An air conditioning system according to claim 1, 2 or 3, wherein the centrifuging cylinder (22) is of steel or stainless steel.

6. An air conditioning system according to any preceding claim, wherein a tapering section (35) connects the centrifuging cylinder (22) to the upper gas outlet (30), which is of smaller diameter than the cylinder.

7. An air conditioning system according to any preceding claim, wherein the duct (20) is configured to deliver oil and gas tangentially into the centrifuging cylinder (22).

8. An air conditioning system according to any preceding claim, wherein the lower oil outlet is a reservoir outlet or a tangential delivery outlet.

9. An air conditioning system according to any preceding claim, wherein the bend or series of bends is through an angle of from 180° to 270°.

10. An air conditioning system according to claim 1, including an oil outlet reservoir (24), the lower oil outlet (28) of each separator being arranged to feed oil to the oil outlet reservoir.

11. An air conditioning system according to claim 10, wherein the oil outlet reservoir (24) is in the form of a substantially horizontal pipe, the centrifuging cylinders (22) being spaced along the substantially horizontal pipe.

## Patentansprüche

1. Klimatisierungssystem mit einem einzelnen Kompressor und einer Vielzahl von Wärmetauschermodulen (50),
wobei jedes Wärmetauschermodul (50) einen Öl-/Gasabscheider aufweist, der eingerichtet ist zum Aufnehmen eines Öl-/Gasgemischs vom Kompressor und zum Zuführen von abgeschiedenem Gas zum jeweiligen Wärmetauschermodul;
wobei jeder Öl-/Gasabscheider eine Leitung (20) mit einem Einlass (13) zur Aufnahme des Öl-/Gasgemischs aufweist, wobei die Leitung (20) eine Innenfläche aufweist, die eine Krümmung oder eine Reihe von Krümmungen aufweist, die sich zumindest teilweise in einer horizontalen Richtung erstrecken, wobei die Leitung (20) im Betrieb zumindest eine teilweise Trennung des Öl-/Gasgemischs bewirkt, durch sowohl Schwerkraft- als auch Zentrifugal-Ölsammlung auf der Innenfläche (21), und wobei die Leitung (20) angeordnet ist zum Zuführen von Gas und gesammeltem Öl in einen Zentrifugierzylinder (22), der eine innere Aufprallfläche, einen oberen Gasauslass (30) und einen unteren Ölauslass (28) aufweist, wobei der Zylinder (22) einen Innendurchmesser von weniger als 180 mm aufweist;
wobei das Klimatisierungssystem ferner einen Gas-/Ölverteiler aufweist, wobei der Gas-/Ölverteiler mit der Leitung (20) jedes Abscheiders in Verbindung steht.

2. Klimatisierungssystem nach Anspruch 1, wobei der Innendurchmesser weniger als 160 mm, weniger als 140 mm oder weniger als 120 mm beträgt.

3. Klimatisierungssystem nach Anspruch 1 oder 2, wobei der Innendurchmesser mindestens 100 mm beträgt.

4. Klimatisierungssystem nach Anspruch 1, 2 oder 3, wobei der Zentrifugierzylinder (22) aus Kupfer, Aluminium oder einer Legierung aus Kupfer oder Aluminium besteht.

5. Klimatisierungssystem nach Anspruch 1, 2 oder 3, wobei der Zentrifugierzylinder (22) aus Stahl oder rostfreiem Stahl besteht.

6. Klimatisierungssystem nach einem der vorstehenden Ansprüche, wobei ein sich verjüngender Abschnitt (35) den Zentrifugierzylinder (22) mit dem oberen Gasauslass (30) verbindet, der einen kleineren Durchmesser als der Zylinder aufweist.

7. Klimatisierungssystem nach einem der vorstehenden Ansprüche, wobei die Leitung (20) eingerichtet ist zum Zuführen von Öl und Gas tangential in den Zentrifugierzylinder (22).

8. Klimatisierungssystem nach einem der vorstehenden Ansprüche, wobei der untere Ölauslass ein Reservoirauslass oder ein tangentialer Förderauslass ist.

9. Klimatisierungssystem nach einem der vorstehenden Ansprüche, wobei die Krümmung oder die Reihe von Krümmungen in einem Winkel von 180° bis 270° verläuft.

10. Klimatisierungssystem nach Anspruch 1, mit einem Ölauslassreservoir (24), wobei der untere Ölauslass (28) jedes Abscheiders angeordnet ist zum Zuführen von Öl zu dem Ölauslassreservoir.

11. Klimatisierungssystem nach Anspruch 10, wobei das Ölauslassreservoir (24) die Form eines im Wesentlichen horizontalen Rohrs hat und die Zentrifugierzylinder (22) entlang des im Wesentlichen horizontalen Rohrs beabstandet sind.

## Revendications

1. Un système d'air conditionné comprenant un unique compresseur et une pluralité de modules (50) d'échangeur de chaleur,
chaque module (50) d'échangeur de chaleur étant équipé d'un séparateur huile/gaz configuré pour recevoir un mélange huile/gaz du compresseur et alimenter le gaz séparé dans le module d'échangeur de chaleur respectif;
chaque séparateur huile/gaz comprenant un conduit (20) ayant une entrée (13) pour recevoir un mélange huile/gaz, le conduit (20) ayant une surface intérieure fournissant un coude ou une série de coudes s'étendant au moins partiellement dans une direction horizontale, le conduit (20) fournissant une séparation au moins partielle du mélange huile/gaz, en utilisation, par collecte d'huile à la fois gravitationnelle et centrifuge sur la surface (21) intérieure, et le conduit (20) étant agencé pour délivrer du gaz et de l'huile collectée dans un cylindre (22) de centrifugation fournissant une surface d'impact interne, une sortie (30) de gaz supérieure et une sortie (28) d'huile inférieure, le cylindre (22) ayant un diamètre interne inférieur à 180 mm;
le système d'air conditionné comprenant en outre un collecteur gaz/huile, dans lequel le collecteur gaz/huile communique avec le conduit (20) de chaque séparateur.

2. Un système d'air conditionné selon la revendication 1, dans lequel ledit diamètre interne est inférieur à 160 mm, inférieur à 140 mm ou inférieur à 120 mm.

3. Un système d'air conditionné selon la revendication 1 ou 2, dans lequel ledit diamètre interne est d'au moins 100 mm.

4. Un système d'air conditionné selon la revendication 1, 2 ou 3, dans lequel le cylindre (22) de centrifugation est en cuivre, en aluminium ou en un alliage de cuivre ou d'aluminium.

5. Un système d'air conditionné selon la revendication 1, 2 ou 3, dans lequel le cylindre (22) de centrifugation est en acier ou en acier inoxydable.

6. Un système d'air conditionné selon l'une quelconque des revendications précédentes, dans lequel une section (35) conique relie le cylindre (22) de centrifugation à la sortie (30) de gaz supérieure, qui est de diamètre plus petit que le cylindre.

7. Un système d'air conditionné selon l'une quelconque des revendications précédentes, dans lequel le conduit (20) est configuré pour délivrer de l'huile et du gaz tangentiellement dans le cylindre (22) de centrifugation.

8. Un système d'air conditionné selon l'une quelconque des revendications précédentes, dans lequel la sortie d'huile inférieure est une sortie de réservoir ou une sortie de distribution tangentielle.

9. Un système d'air conditionné selon l'une quelconque des revendications précédentes, dans lequel le coude ou la série de coudes forme un angle de 180° à 270°.

10. Un système d'air conditionné selon la revendication 1, incluant un réservoir (24) de sortie d'huile, la sortie (28) d'huile inférieure de chaque séparateur étant agencée pour alimenter en huile le réservoir de sortie d'huile.

11. Un système d'air conditionné selon la revendication 10, dans lequel le réservoir (24) de sortie d'huile se présente sous la forme d'un tuyau sensiblement horizontal, les cylindres (22) de centrifugation étant espacés le long du tuyau sensiblement horizontal.
